Europäisches Patentamt

European Patent Office

Office européen des brevets

(11) Publication number: **0 516 235 A1**

## EUROPEAN PATENT APPLICATION

(21) Application number: 92201489.9

(22) Date of filing: 26.05.92

(51) Int. Cl.5: **B29C 67/14**, B29C 51/26

(30) Priority: 29.05.91 BE 9100514
24.12.91 EP 91203406

(43) Date of publication of application:
02.12.92 Bulletin 92/49

(84) Designated Contracting States:
AT BE CH DE DK ES FR GB GR IT LI NL PT SE

(71) Applicant: DSM N.V.
Het Overloon 1
NL-6411 TE Heerlen(NL)

(72) Inventor: Boonen, Petrus Johannes
Lambertus
van Loonstraat 10
NL-6081 BP Haelen(NL)
Inventor: Hornman, Hans Hubertus Henricus
Norbertijnenstraat 72
NL-6166 AL Geleen(NL)
Inventor: Marissen, Roelof
Koningstraat 55
NL- 6121 HS Born(NL)

(54) **Process for processing a material comprising thermoplastic polymer and fibrous reinforcing material.**

(57) The invention relates to a process for processing a material comprising thermoplastic polymer and fibrous reinforcing material to form a molded product by means of a mold characterized in that the material is heated with contact heat without the use of release foils or plates.

The invention relates to a process for processing a material comprising thermoplastic polymer and fibrous reinforcing material to form a molded product by means of a mold.

An example of a process for preparing molded products from materials comprising thermoplastic polymers and fibrous reinforcing materials is called, inter alia, a thermoforming process. A generally known thermoforming process is to put an amount of fibers and an amount of thermoplastic polymer in a mold and to heat these under pressure, in which process the thermoplastic polymer melts and wets the fibers. Release foils or release agents are added to prevent the molded product from building up on the mold and will preserve mold detail and design. By minimizing the building up on the mold, the mold can be kept in production for a longer period of time, and production lines become faster and more economic. When all the polymer has melted and the fibers are properly wetted, the mold is cooled in the press to below the melting point of the polymer, so that the product consolidates. The product is taken out and the press can be used again for a following cycle. See for example Kunststof & Rubber, 1991, no. 1, pp. 15-19.

The disadvantage is that, in order to prevent the thermoplastic resin from sticking to the mold, internal or external release agents have to be used, which are known to affect the properties of the molded product and are quite expensive. Other disadvantages of the use of release agents are that they are known to built up on the mold, subsequent cleaning of the mold often has deleterious effects, release agents are not always compatible with the subsequent steps in the operation such as painting and bonding. These disadvantages are also described in Handbook of composites, Ed. G. Lubin 1982, p 633 ff.

An object of the present invention is to provide a process that does not have said disadvantages.

The objects of the present invention are achieved by a process in which a material comprising a thermoplastic polymer and fibrous reinforcing material is heated with contact heat without the use of release foils or plates. This is a major advantage as compared with heating the material through additional means like release foils or plates. Surprisingly, in this way, the mold is not polluted, or not polluted to a great extent and the products or half-products obtained have properties that are of a constant quality.

The objects of the present invention are further achieved by heating the thermoplastic polymer and fibrous reinforcing material under pressure in a first mold followed by cooling under pressure in a second mold. The objects of the present invention are further achieved by applying additional parts between the two mold halves on top of the material. On opening the first mold, it is possible that the molten material is disrupted by the force of the opening of the mold because it sticks somewhat to the parts of the mold. If the upper part of the mold is moved upwards, the additional parts will keep the material down. They can be moved upwards subsequently, during which the material will no longer be as easily disrupted. The additional parts applied can e.g. be strips of metal or other material that are hingedly connected to the mold or the press and can be moved separately from the other mold parts. It is possible to add one or more longitudinal strips to the mold whose surface forms an integral part together with the other mold parts. These strips can be removed by lifting them up, by hinges or by rolling them up.

The process of the present invention with two molds requires that the first mold need be brought to the desired temperature only once, when a production batch is started up, and can thereafter be kept at that temperature. The second mold, too, need be brought to its desired temperature only once, not counting, of course, the effects of the heat exchange with the material comprising a thermoplastic polymer and fibrous reinforcing material. The amount of energy required for heating and cooling is now determined only by the specific heat and the weight of the material comprising a thermoplastic polymer, hereinafter referred to as thermoplastic and fibrous reinforcing material and no longer by the heat capacity of the mold or molds.

A further advantage of the process with two molds according to the present invention is that good results are obtained, irrespective of the thermoplastic used, because, by applying pressure during the heating process, total impregnation takes place within a very short time.

In carrying out the process of the present invention with two molds, the first mold is preferably kept at a substantially constant temperature. This temperature is above the melting temperature of the thermoplastic material. The temperature of the mold can be maintained in the manner known in the art, for instance with heating tubes applied in the mold or by electric lines or by infra-red radiation from the outside. The temperature can, for instance, be regulated by means of a thermostat.

The temperature is maintained between the melting temperature of the thermoplastic and the temperature at which the thermoplastic degrades which, of course, depends on the thermoplastic used. The second mold is preferably kept at a substantially constant temperature, too. The temperature is maintained below the melting temperature of the thermoplastic material. This can be done in the same way as described above for the first mold. The second mold will usually have to be cooled, because its repeated use will cause it to be heated up. The temperature will generally be between room temperature and 120°C, but this is usually not very critical.

The first and the second mold preferably have a heat capacity which is high compared with the heat capacity of the amount of material to be processed.

The process according to the present invention can be used in various processing techniques, such as compression molding or injection molding.

In the processing of the thermoplastic fiber-reinforced material by means of compression molding, the first press exercises a pressure high enough to press the melted thermoplastic between the fibers. This pressure will generally be between 5 and 100 bar and preferably between 15 and 50 bar. This pressure can be achieved hydraulically, pneumatically, with gravity, or with any other available means. If, for example, the top half of the mold is heavy enough, it may not be necessary to apply any additional force.

The pressure dwell in the first press is, as a rule, less than 10 minutes, and usually less than 5 minutes.

The second press generally exercises a pressure high enough to wet any fibers not yet completely wetted and to keep the product in a desired shape. The second pressure, therefore, must at least be so high as to prevent the material compressed in the first press from becoming less compact in the second press as a result of the fibers springing back after being pressed together.

The pressure dwell in the second press is usually less than 4 minutes, and can be as short as 2 minutes or less.

The process according to the invention is particularly suited for the production of flat composite sheets. These sheets can subsequently be processed to form an end product by die-cutting, three-dimensional compression molding and folding, by localized heating of the sheets.

The process according to the present invention is preferably carried out with two or more compression molding tiers incorporated in one compression molding system, one on top of the other.

The advantage of this arrangement is that by exercising one single pressure all presses can be simultaneously pressed. This results in substantial savings of material and space, and consequently costs. For mass production purposes, preference is given to heating all presses in a first compression molding system like the above and cooling all presses in a following system.

It is possible to pre-heat the compound to be molded, so that the pressure dwell in the first press can be reduced.

The thermoplastic can be chosen from all possible thermoplastic (co)polymers such as polyamides (PA), such as nylon-6, nylon-6,6, nylon-4,6 (Stanyl[R]), nylon-8, nylon-6,10, nylon-11, nylon-12, etc., polyolefins, such as polypropylene (PP), polyethylene (PE), polytetrafluoroethylene (PTFE), polyphenylene ether (PPE), etc., amorphous and/or crystalline polyesters such as polyalkylene terephthalates, such as polyethylene terephthalate (PET), polybutene terephthalate (PBT), etc., or polyimides (PI), such as polyetherimide (PEI), polyamide-imide (PAI), or polymethyl(meth)acrylate (PMMA), polyether methacrylate (PEMA). Further, polyphenylene sulphide (PPS), polyvinyls, such as polyvinyl alcohol (PVA), polyvinyl acetate (PVAc), ethylene vinyl acetate (EVA), polyvinyl chloride (PVC), polyvinylidene chloride (PVDC), copolymers of vinyl chloride and vinylidene chloride or polyvinylidene fluoride (PVDF or PVF2), polyethylene glycol (PETG), styrene-containing copolymers such as polystyrene (PS), polymonochlorostyrene or styrene acrylonitrile copolymers (SAN), styrene-maleic anhydride (SMA), polyacrylonitrile (PAN), polyarylenesulphideketone, polyoxymethylene (POM), polycarbonate (PC), polyethers (PEth), polyetherketone (PEK), polyacetals, polyacrylic acid, polyurethanes (PUR), polyarylic acid (PAA), cellulose esters, and polybenzimidazole (PBI), and blends of said substances.

It is preferred to use PET, PC or nylon-4,6.

The thermoplastic can be used in any form, such as a film, powder, granules, fibers, chips, fabrics and the like. Depending on the requirements of the end product, one form or a combination of the forms of the thermoplastic will be chosen.

It is possible for a crosslinking agent, or an amount of thermoset or thermosetting plastic, to be added to the thermoplastic. The thermoplastic may further contain the usual additives, such as stabilizers, pigments, fillers, etc.

The fibrous reinforcing material may be any possible material and may be of any possible form. Examples of fibrous material are glass, carbon, regular or in the form of so-called whiskers (Hyperion[R]), aramide, silicon carbide, aluminum oxide, asbestos, ceramic, graphite, metal and a plastic, for example, chosen from the group consisting of the above-mentioned thermoplastics, or combinations thereof.

If a plastic fiber is used as reinforcing fiber, the plastic is preferably chosen so that it does not melt or degrade at the melting temperature of the thermoplastic.

The fiber material preferably comprises glass, carbon, aramide or polyethylene.

The fibrous reinforcing material may be in the form of, for example, a mat, fleece, woven, plaited or knitted fabric, fibers with unidirectional or with random orientation, and the fibers may be short or long.

It is possible also to use mixtures of fibrous materials or forms.

It is preferred to use fabrics with predominantly continuous fibers.

In a first preferred embodiment, the material comprising a thermoplastic and fibrous reinforcing material is used in the form of stacked thermoplastic films alternated with flat fiber structures such as fabrics or mats.

The films can be replaced by granules, chips or flakes that can be strewn in the mold and/or on the fabric. To this end recycled material can also be used.

It is also preferred that the material comprising a thermoplastic and fibrous reinforcing material be used in the form of a so-called hybrid fabric. A hybrid fabric is a fabric in which reinforcing fibers and thermoplastic fibers are mixed with each other, see also EP-A-0417827. The advantage of such a fabric is that the reinforcing fibers and thermoplastic fibers are already intimately mixed before the melting and that, as a result, the wetting of the reinforcing fibers by the melted thermoplastic will proceed rapidly and at a relatively low pressure.

According to another preferred embodiment, the material comprising a thermoplastic and a fibrous reinforcing material is used in the form of a fibrous mat or fabric on which the thermoplastic has been applied in the form of a powder. Such a mat or fabric can be obtained, for instance, by immersing a mat or fabric in a dispersion of a thermoplastic polymer and by subsequent drying. Such a mat or fabric can be obtained also by impregnating a fiber with such a dispersion, or otherwise, and by subsequently making a mat or fabric thereof. It is further possible to obtain such a mat or fabric by contacting the fabric or the fibers with dry powder, for instance in a turbulent fluidized bed. These are all customary techniques and therefore they are not part of the invention.

An advantage of said hybrid fabric and of the said powdered fabric or mat is that the mat and the fabric are easy to drape and that it is consequently easy to fill a press or mold with such a mat or with such a fabric.

Of course, combinations of said types of materials can also be used. Various types of thermoplastics and various types of fibrous reinforcing material, too, can be used in combination.

If the thermoplastic material has something of a consistent form, it is possible to supply the material to the first mold and/or from the first to the second mold and/or from the second mold with the use of clamping means. This can be a tool in any form in which the thermoplastic material can be clamped, and lifted.

The clamping means can remain clamped on the material during the first and or second press stage, or can be removed. It is possible to automate this handling with the use of a computer and a robot, which is generally described in the art and does not form part of the invention.

The percentage by volume of fibrous reinforcing material is usually 20-80%, preferably 35-60%.

The invention will be elucidated by means of the following examples without, however, being limited thereto.

Example I

On a 2-millimeter-thick chrome nickel sheet a stack was layed consisting of 5 layers (dimensions 300x230 mm) of PET.P tissue (Viscosuisse[R], 33 tex black). These 50/50 tissues are built up of assembled filaments of 1x600 tex Cosmostrand[R] R28 EX 20 and 11x33 tex Viscosuisse[R] PET.P. The package was dried for 1 hour at 150°C, and put in a laboratory press with a temperature of 300°C. The press exercised a pressure of 1 bar for 3.5 minutes. After that, the package was transferred to a laboratory press with a temperature around room temperature. This second press exercised a pressure of 25 bar for 30 seconds.

On the resulting fiber-reinforced thermoplastic sheet the mechanical properties of both amorphous and crystalline material were determined using the 4-point bending test according to ASTM D790. Amorphous material was obtained by drying for 1 hour at 80°C, crystalline material was obtained by heating for 1 hour at 80°C and 30 minutes at 150°C. The results are shown in Table 1.

Examples II through XVIII

The process according to Example I was followed for molding a series of packages, one after the other, while introducing a number of stops of variable length of time :
- after package 6, 45 minutes pause
- after package 12, 30 minutes pause
- after package 15, the heating was turned off for 16 hours, and turned on again afterwards. It took 3 hours to reach a temperature of 300°C.

Examples XIX through XXVII

Another type of PET.P tissue, Diolen[R] 855T-PET.P (110 tex white), built up of 1x600 tex Cosmostrand[R] R28 EX 20 and 4x110 tex Diolen[R] 855T was used. The experimental procedure as described in Example I was used for molding a series of packages, one after the other, while introducing the following variables :
- package XIX and XX : 17 bar pressure
- package XXI : 170 bar pressure
- package XXII : 25 bar pressure, 45 minutes pause
- package XXIII through XXV : 25 bar pressure
- package XXVI : 242 bar pressure
- package XXVII : 17 bar pressure

## TABLE  1

### Viscosuisse[R]-tissue

| Package | E-mod (GPa) | σ-max. (MPa) | E-mod. (GPa) | σ-max. (MPa) |
|---------|------|-------|-------|-------|
| I | 18 | 377 | 17 | 344 |
| II | 21 | 453 | 19 | 396 |
| III | 20 | 410 | 20 | 417 |
| IV | 20 | 419 | 19 | 368 |
| V | 21 | 449 | 19 | 407 |
| VI* | 20 | 422 | 19 | 396 |
| VII | 20 | 413 | 17 | 363 |
| VIII | 20 | 420 | 18 | 372 |

TABLE 1 (continued)

| Package | E-mod (GPa) | σ-max. (MPa) | E-mod. (GPa) | σ-max. (MPa) |
|---|---|---|---|---|
| IX | 20 | 417 | 16 | 328 |
| X | 19 | 398 | 18 | 346 |
| XI | 20 | 422 | 19 | 374 |
| XII* | 20 | 430 | 18 | 369 |
| XIII | 20 | 442 | 16 | 290 |
| XIV | 18 | 388 | 17 | 343 |
| XV* | 21 | 457 | 18 | 360 |
| XVI | 20 | 416 | 16 | 272 |
| XVII | 18 | 388 | 17 | 347 |
| XVIII | 18 | 372 | 16 | 301 |

Diolen[R]-tissue

| | | | | |
|---|---|---|---|---|
| XIX | 23 | 428 | 23 | 424 |
| XX | 21 | 451 | 19 | 352 |
| XXI | 24 | 442 | 21 | 343 |
| XXII* | 21 | 402 | 23 | 448 |
| XXIII | 21 | 414 | 23 | 428 |
| XXIV | 23 | 435 | 20 | 397 |
| XXV | 21 | 402 | 21 | 391 |
| XXVI | 23 | 411 | 25 | 412 |
| XXVII | 23 | 432 | 23 | 417 |

* a pause was introduced after the experiments marked with
   *, as described in examples II through XXVII.

From table 1 it may be concluded that the introduction of a 45 minutes pause after pressing package XXII had no influence on the mechanical properties of the next package XXIII, although a partial degradation of the Diolen[R] matrix had occurred, which could be seen from the discoloration of the package. The subsequent package (XXIV) did not contain any degraded material and had the required mechanical properties. Similar phenomena were observed after pressing package VI, XII and XV using the Viscosuisse[R] tissue. Despite the presence of some degraded tissue after introducing a stop in the production cycle, the

EP 0 516 235 A1

mechanical properties of the subsequent packages (respectively experiment VII, XIII and XVI) were not found to be altered. From these observations it can be concluded that the excess PET.P sticking to and contaminating the mold, is refreshened when the production cycle is continued after introducing stops of variable lenghts of time, and does not alter the mechanical properties of the subsequent packages.

Furthermore, variation of the pressure in experiments XX through XXVII has no influence on the mechanical properties of the obtained crystalline or amorphous packages.

The use of contact heat furter is a substantial improvement as compared to infrared heating, in that the formation of smoke, which is substantial when using an infrared source, was negligible.

## Claims

1. Process for processing a material comprising thermoplastic polymer and fibrous reinforcing material to form a molded product by means of a mold characterized in that the material is heated with contact heat without the use of release foils or plates.

2. Process according to claim 1 characterized in that additional parts are applied on top of the material to keep the material down upon opening of the mold.

3. Process according to any one of claims 1-2 characterized in that the material is heated under pressure in a first mold and cooled under pressure in a second mold.

4. The process according to claim 3, characterized in that the first mold is kept at a substantially constant temperature above the melting temperature of the thermoplastic material and the second mold is kept at a substantially constant temperature below the melting temperature of the thermoplastic material.

5. The process according to any one of claims 1-4, characterized in that the first and second molds have a heat capacity that is high compared with the heat capacity of the amount of material to be processed.

6. The process according to any one of the claims 1-5, characterized in that the presses exercise a pressure of between 5 and 100 bar.

7. The process according to any one of the claims 1-6, characterized in that a compression molding system is used with two or more compression molding tiers, one on top of the other.

8. The process according to any one of the claims 1-7, characterized in that the material consists of stacked thermoplastic films alternated with flat fiber structures.

9. The process according to any one of the claims 1-8, characterized in that the material is a hybrid fabric.

10. The process according to any one of the claims 1-9, characterized in that the material consists of a fiber mat or fabric to which the thermoplastic is attached in the form of a powder.

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | EP-A-0 396 456 (AVIONS MARCEL DASSAULT-BREGUET AVIATION) <br> * the whole document * <br> --- | 1,3-6, 8-10 | B29C67/14 <br> B29C51/26 |
| X | PATENT ABSTRACTS OF JAPAN <br> vol. 14, no. 58 (M-930)(4001) 2 February 1990 <br> & JP-A-1 285 315 ( KOUSEINOU JUSHI SHINSEIZOU GIJUTSU KENKYU KUMIAI ) 16 November 1989 <br> * abstract * <br> --- | 1,3-6, 8-10 | |
| A | US-A-4 676 944 (KORB ET AL.) <br> * column 3, line 41 - line 57 * <br> --- | 2 | |
| A | DE-C-3 418 098 (SIEMPELKAMP) <br> * abstract; figures * <br> ----- | 7 | |
| | | | **TECHNICAL FIELDS SEARCHED (Int. Cl.5)** <br><br> B29C |

The present search report has been drawn up for all claims

| Place of search | Date of completion of the search | Examiner |
|---|---|---|
| THE HAGUE | 07 SEPTEMBER 1992 | VAN WALLENE A.M. |

EPO FORM 1503 03.82 (P0401)